# EUROPEAN PATENT APPLICATION

(11) **EP 4 726 625 A1**
(43) Date of publication of application: **15.04.2026**
(21) Application number: 25206029.8
(22) Date of filing: 01.10.2025
(51) Int. Cl.: G06Q 10/10, G06Q 50/50, H04L 12/18, H04N 7/15, H04W 4/48

(54) **INFORMATION PROCESSING DEVICE, INFORMATION PROCESSING SYSTEM, AND INFORMATION PROCESSING METHOD**

(30) Priority: 09.10.2024 JP 2024177460
(71) Applicant: TOYOTA JIDOSHA KABUSHIKI KAISHA, Toyota-shi, Aichi-ken 471-8571 (JP)
(72) Inventor: WATANABE, Yu, Toyota-shi, 471-8571 (JP); SUGIMOTO, Shingo, Toyota-shi, 471-8571 (JP); ITO, Yuma, Toyota-shi, 471-8571 (JP)
(74) Representative: D Young & Co LLP

(57) **Abstract**

An information processing device (11) includes a control unit (112). The control unit (112) is configured to determine a role of a person to be a target in an online meeting based on information about the online meeting. The control unit (112) is configured to determine whether to permit the person to participate in the online meeting in a vehicle based on the role.

## Description

### BACKGROUND OF THE INVENTION

### 1. Field of the Invention

The present disclosure relates to an information processing device, an information processing system, and an information processing method.

### 2. Description of Related Art

In recent years, online meetings and in-car work have become widespread, and it is possible to remotely attend an online meeting from inside a vehicle. For example, Japanese Unexamined Patent Application Publication No. 2022-129626 (JP 2022-129626 A) discloses an online meeting system that achieves an appropriate online meeting corresponding to the state of a vehicle by switching between output and non-output of an other-side audio signal from a speaker in the vehicle in accordance with the state of the vehicle or switching between transmission and non-transmission of a vehicle-side audio signal to an other-side terminal device in accordance with the state of the vehicle.

### SUMMARY OF THE INVENTION

In the case of participating in an online meeting from inside a vehicle, appropriate consideration should be given to circumstances, as requesting spoken input during vehicle operation may lead to reduced attention.

The present disclosure provides an information processing device, an information processing system, and an information processing method that can further improve the safety of an online meeting in a vehicle.

An information processing device of a first aspect of the present disclosure includes a control unit. The control unit is configured to determine a role of a person to be a target in an online meeting based on information about the online meeting. The control unit is configured to determine whether to permit the person to participate in the online meeting in a vehicle based on the role.

In the information processing device according to the first aspect of the present disclosure, when the role is an organizer of the online meeting or a required attendee of the online meeting, the control unit may be configured to determine not to permit the person to participate in the online meeting or may be configured to determine to permit the person only to listen to audio of the online meeting.

In the information processing device according to the first aspect of the present disclosure, the control unit may be configured to determine whether the person is a driver of the vehicle based on a position of each person in the vehicle. The control unit may be configured to determine to permit the person to participate in the online meeting when the person is not the driver.

In the information processing device according to the first aspect of the present disclosure, the control unit may be configured to determine whether the vehicle is traveling on an expressway and is in an autonomous driving mode based on map information and state information of the vehicle, when the person is the driver. The control unit may be configured to determine to permit the person to participate in the online meeting when the vehicle is traveling on the expressway and is in the autonomous driving mode.

In the information processing device according to the first aspect of the present disclosure, when the control unit determines to permit the person to participate in the online meeting, the control unit may be configured to permit the person to participate in the online meeting and perform control to enable advanced safety equipment of the vehicle.

In the information processing device according to the first aspect of the present disclosure, after the control unit determines to permit the person to participate in the online meeting when the vehicle is traveling on the expressway and is in the autonomous driving mode, when the vehicle is not traveling on the expressway or the autonomous driving mode is canceled, the control unit may be configured to perform control to remove the person from the online meeting.

In the information processing device according to the first aspect of the present disclosure, when the control unit detects an impact of a predetermined threshold or more by using a sensor included in the vehicle after the control unit determines to permit the person to participate in the online meeting, the control unit may be configured to interrupt the online meeting and configured to notify participants of the online meeting that the vehicle has received a strong impact.

The information processing device according to the first aspect of the present disclosure may further include a communication unit that communicates with a server. When the information about the online meeting is received from the server, and the control unit permits the person to participate in the online meeting in the vehicle, the communication unit may receive video and audio of the online meeting from the server.

The information processing device according to the first aspect of the present disclosure may further include an input unit configured to receive an operation of the person inputting an account. The account may include personal identification information that identifies an individual. The control unit may be configured to determine the role of the person in the online meeting from the personal identification information and the information about the online meeting.

The information processing device according to the first aspect of the present disclosure may further include an input unit configured to receive an operation of the person inputting an account. The account may include seat identification information that identifies a seat in the vehicle. The control unit may be configured to determine whether the person is the driver of the vehicle from the seat identification information.

An information processing system according to a second aspect of the present disclosure includes an information processing device mounted on a vehicle, and a terminal device mounted on the vehicle. The information processing device is configured to determine a role of a person to be a target in an online meeting based on information about the online meeting. The information processing device is configured to determine whether to permit the person to participate in the online meeting in the vehicle based on the role. The terminal device is configured to receive video and audio of the online meeting when the information processing device permits the person to participate in the online meeting in the vehicle. The terminal device is configured to output video and audio of the online meeting received by the information processing device.

In the information processing system according to the second aspect of the present disclosure, when the role is an organizer of the online meeting or a required attendee of the online meeting, the information processing device may be configured to determine not to permit the person or configured to determine to permit the person only to listen to audio of the online meeting.

In the information processing system according to the second aspect of the present disclosure, the information processing device may be configured to determine whether the person is a driver of the vehicle based on a position of each person in the vehicle. The information processing device may be configured to determine to permit the person to participate in the online meeting when the person is not the driver.

In the information processing system according to the second aspect of the present disclosure, the information processing device may be configured to determine whether the vehicle is traveling on an expressway and is in an autonomous driving mode based on map information and state information of the vehicle, when the person is the driver. The information processing device may be configured to determine to permit the person to participate in the online meeting when the vehicle is traveling on the expressway and is in the autonomous driving mode.

In the information processing system according to the second aspect of the present disclosure, when the information processing device determines to permit the person to participate in the online meeting, the information processing device may be configured to permit the person to participate in the online meeting and configured to perform control to enable advanced safety equipment of the vehicle.

In the information processing system according to the second aspect of the present disclosure, after the information processing device determines to permit the person to participate in the online meeting when the vehicle is traveling on the expressway and is in the autonomous driving mode, the information processing device may be configured to perform control to remove the person from the online meeting when the vehicle is not traveling on the expressway or the autonomous driving mode is canceled.

In the information processing system according to the second aspect of the present disclosure, when the information processing device detects an impact of a predetermined threshold or more by using a sensor included in the vehicle after the information processing device determines to permit the person to participate in the online meeting, the information processing device may be configured to interrupt the online meeting and configured to notify participants of the online meeting that the vehicle has received a strong impact.

A third aspect of the present disclosure is an information processing method executed by an information processing device mounted on a vehicle. The information processing method includes determining a role of a person to be a target in an online meeting based on information about the online meeting, and determining whether to permit the person to participate in the online meeting in a vehicle based on the role.

In the information processing method according to the third aspect of the present disclosure, when the role is an organizer of the online meeting or a required attendee of the online meeting, the information processing device may be configured to determine not to permit the person to participate in the online meeting or configured to determine to permit the person only to listen to audio of the online meeting.

In the information processing method according to the third aspect of the present disclosure, the information processing device may be configured to determine whether the person is a driver of the vehicle based on a position of each person in the vehicle, and the information processing device may be configured to determine to permit the person to participate in the online meeting when the person is not the driver.

The present disclosure makes it possible to further improve the safety of an online meeting in a vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a schematic configuration of an information processing system according to an embodiment of the present disclosure;
FIG. 2 is a diagram showing an example of a terminal device mounted on a vehicle;
FIG. 3 is a flowchart showing a first operation example of an information processing device according to the embodiment of the present disclosure; and
FIG. 4 is a flowchart showing a second operation example of the information processing device according to the embodiment of the present disclosure.

### DETAILED DESCRIPTION OF EMBODIMENTS

Hereinbelow, an embodiment of the present disclosure will be described in detail with reference to the drawings.

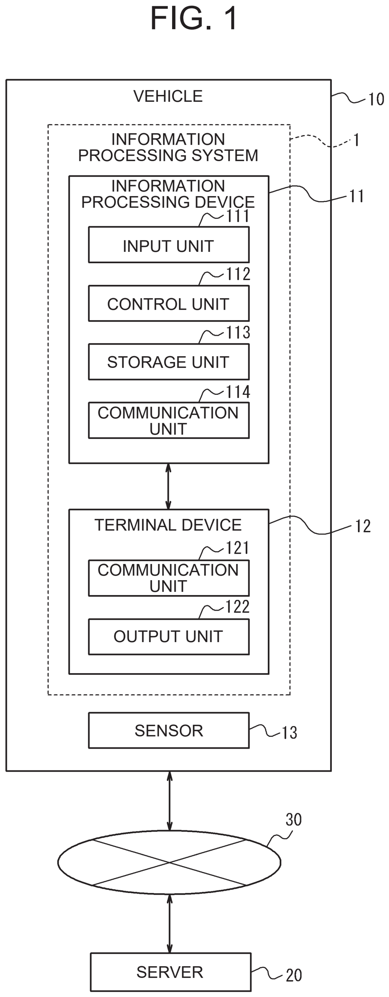

The configuration of an information processing system according to an embodiment will be described with reference to FIG. 1. An information processing system 1 shown in FIG. 1 includes an information processing device 11, and a terminal device 12. A vehicle 10 includes the information processing system 1, and a sensor 13. The information processing device 11 and a server 20 are communicably connected to each other through a network 30 including the Internet.

The server 20 is a server for conducting online meetings. The server 20 may be a cloud server or an on-site server.

The information processing device 11 is an in-vehicle device that is mounted on the vehicle 10. The information processing device 11 wirelessly communicates with the server 20 through the network 30, receives video and audio during an online meeting from the server 20, and transmits the received video and audio to the terminal device 12. The information processing device 11 includes an input unit 111, a control unit 112, a storage unit 113, and a communication unit 114.

The input unit 111 includes at least one input interface. The input interface is, for example, a physical key, a capacitive key, a touch screen integrated with a display, or a microphone. The input unit 111 receives an operation to input data that is used for the operation of the information processing device 11 such as an account.

The control unit 112 includes at least one processor, at least one programmable circuit, at least one dedicated circuit, or any combination thereof. The processor is a general-purpose processor such as a central processing unit (CPU) or a graphics processing unit (GPU), or a dedicated processor specialized for a specific process. The programmable circuit is, for example, a field-programmable gate array (FPGA). The dedicated circuit is, for example, an application specific integrated circuit (ASIC). The control unit 112 executes a process related to the operation of the information processing device 11 while controlling each unit of the information processing device 11. In addition, the at least one processor, the at least one programmable circuit, the at least one dedicated circuit, or any combination thereof of the control unit 112 is configured to execute the function of the control unit 112.

The control unit 112 determines whether to permit or not to permit participation in an online meeting. Hereinbelow, a person to be a target of the determination is referred to as the "target person". There may be more than one target person. The control unit 112 determines the role of the target person in the online meeting based on meeting information acquired from the server 20, and determines whether to permit the target person to participate in the online meeting in the vehicle 10 based on the role. Details of the process of the control unit 112 will be described further below.

The storage unit 113 includes at least one semiconductor memory, at least one magnetic memory, at least one optical memory, or any combination thereof. The semiconductor memory is, for example, a random access memory (RAM), a read only memory (ROM), or a flash memory. The storage unit 113 functions as, for example, a main storage device, an auxiliary storage device, or a cache memory. The storage unit 113 stores information used for the operation of the information processing device 11 and information acquired by the operation of the information processing device 11.

The communication unit 114 includes a communication interface for communicating with the server 20, and a communication interface for communicating with the terminal device 12. The communication unit 114 receives information about the online meeting (hereinbelow, referred to as the "meeting information") from the server 20. The meeting information includes the date and time of the meeting, identification information such as the names of attendees in the meeting, and information indicating the roles of the attendees in the online meeting. The information indicating the roles in the online meeting includes information indicating whether each attendee in the meeting is an organizer, a required attendee, or an optional attendee. In addition, when the control unit 112 permits the target person to participate in the online meeting in the vehicle, the communication unit 114 receives video and audio during the online meeting from the server 20.

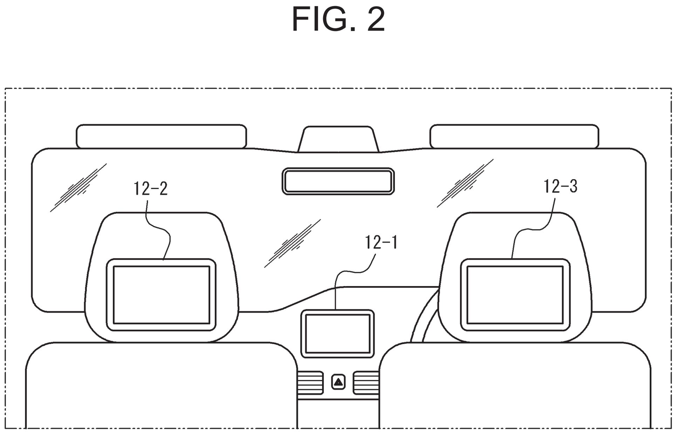

The terminal device 12 outputs the video and audio received from the information processing device 11. The terminal device 12 may be a part of a navigation device mounted on the vehicle 10. The terminal device 12 may also be provided on the passenger seat and/or the rear seat of the vehicle 10. The terminal device 12 may be a device mounted on the vehicle 10 or a mobile terminal such as a smartphone. FIG. 2 shows an example of the terminal devices 12 (12-1, 12-2, 12-3) mounted on vehicle 10. When the target person is permitted to participate in the online meeting, the target person uses the terminal device 12-1 when sitting in the driver's seat or the passenger seat, and uses the terminal device 12-2 or 12-3 when sitting in the rear seat.

The terminal device 12 may be previously mounted on the vehicle 10. A plurality of terminal devices 12 may be mounted on the vehicle 10. The terminal device 12 includes a communication unit 121, and an output unit 122.

The communication unit 121 includes a communication interface for communicating with the information processing device 11. The communication unit 121 receives video and audio during the online meeting from the information processing device 11.

The output unit 122 includes a display that outputs the video acquired from the information processing device 11, and a speaker that outputs the audio acquired from the information processing device 11. The display is, for example, a liquid crystal display (LCD) or an organic electro luminescent (EL) display.

The sensor 13 includes a sensor that measures a position by receiving satellite signals from a Global Navigation Satellite System (GNSS) such as the Global Positioning System (GPS), and an acceleration sensor that detects an impact.

### Operation of Information Processing Device

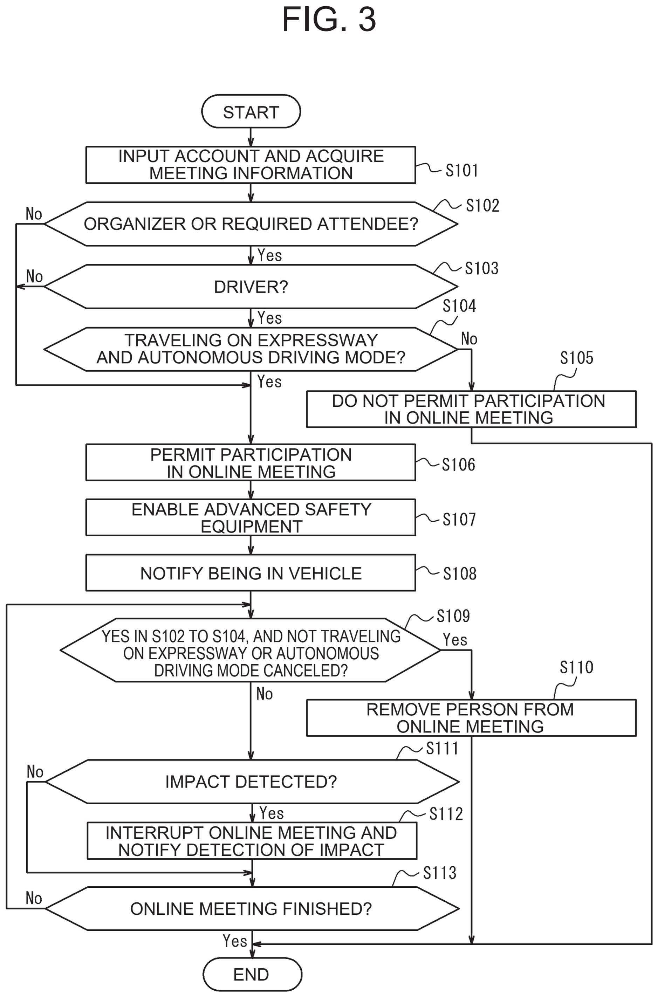

Next, first operation of the information processing device 11 according to the embodiment will be described with reference to FIG. 3. In the following, the information processing device 11 communicates with the server 20 through the communication unit 114 and the network 30, and communicates with the terminal device 12 through the communication unit 114.

In step S101, a person who wishes to attend an online meeting from the vehicle 10 inputs an account that differs for each seat through the input unit 111. The account includes personal identification information that identifies an individual and seat identification information that identifies a seat in the vehicle 10. The information processing device 11 transmits the account to the server 20. The server 20 performs authentication based on the account, and transmits meeting information to the information processing device 11 when the authentication is successful. The information processing device 11 acquires the meeting information from the server 20, and stores the meeting information in the storage unit 113.

In step S102, the control unit 112 determines the role of the target person in the online meeting from the personal identification information contained in the account and the meeting information. When the role is an organizer or a required attendee, the process proceeds to step S103. When the role is neither the organizer nor the required attendee, the process proceeds to step S106.

In step S103, the control unit 112 determines whether the target person is the driver of the vehicle 10 based on the seat identification information contained in the account (that is, based on information indicating the position of each person in the vehicle). The control unit 112 proceeds with the process to step S104 when the target person is the driver of the vehicle 10 and proceeds with the process to step S106 when the target person is not the driver of the vehicle 10. It does not matter which one of the process of step S102 and the process of step S103 is performed first.

In step S104, the control unit 112 determines whether the vehicle 10 is traveling on an expressway and is in an autonomous driving mode based on map information indicating the current location on a map and state information indicating a driving mode of the vehicle 10. The term "autonomous driving" refers to a system (machine) performing recognition, determination, and driving operations that are performed by the driver in place of humans. An autonomous driving level that indicates the technical level of autonomous driving is defined in six stages of 0 to 5. Here, an autonomous driving level 3 is assumed. When a vehicle with an autonomous driving level of 4 or higher is developed in the future, the conditions of step S104 can be changed as appropriate, for example, the conditions may be changed to "the vehicle 10 is traveling on an expressway and is in the autonomous driving mode, or the autonomous driving level is 4 or higher". The control unit 112 proceeds with the process to step S106 when the vehicle 10 is traveling on an expressway and is in the autonomous driving mode, and proceeds with the process to step S105 when the vehicle 10 is not traveling on an expressway or is not in the autonomous driving mode.

In step S105, the control unit 112 determines not to permit participation in the online meeting. The control unit 112 may cause the terminal device 12 to display a message indicating that participation in the online meeting is not permitted. The control unit 112 may cause the terminal device 12 to display the reason for the determination, the conditions for being able to participate in the online meeting, or the like. The control unit 112 finishes the process when the control unit 112 determines not to permit participation in the online meeting.

In step S106, the control unit 112 determines to permit participation in the online meeting. The communication unit 114 transmits video and audio of the online meeting acquired from the server 20 to the terminal device 12. That is, even when the organizer or the required attendee is the driver, safety is ensured when the vehicle 10 is traveling on an expressway and is in the autonomous driving mode. Thus, participation in the online meeting is permitted. As another example, when the organizer or the required attendee is the driver, participation in the meeting may not be permitted, and when the organizer or the required attendee is in the passenger seat or the rear seat, participation in the online meeting may be permitted when the vehicle 10 is traveling on an expressway and is driving autonomously.

In step S107, the control unit 112 permits the target person to participate in the online meeting, and performs control to enable advanced safety equipment of the vehicle 10.

In step S 108, the control unit 112 notifies the server 20 that the target person is on board. The server 20 causes each of the terminals of the meeting attendees to display that the target person is on board. It does not matter which one of the process of step S107 and the process of step S108 is performed first.

In step S109, the control unit 112 determines whether Yes has been determined in steps S102 to S104 (that is, after it is determined to permit participation in the online meeting when the vehicle 10 is traveling on the expressway and is in the autonomous driving mode), whether the vehicle 10 is traveling on the expressway, and whether the autonomous driving mode is canceled. The control unit 112 proceeds with the process to step S110 when the vehicle 10 is not traveling on the expressway (that is, the vehicle 10 has got off the expressway) or the autonomous driving mode is canceled, and proceeds with the process to step S111 when the vehicle 10 is traveling on the expressway and the autonomous driving mode is continuing.

In step S110, the control unit 112 performs control to remove the target person from the online meeting. For example, the control unit 112 instructs the terminal device 12 to display, on the output unit 122, a message that orders the target person to leave the online meeting or a message that informs the target person that the participation in the meeting is switched from permitted to not permitted. Then, the control unit 112 stops the transmission of the video and audio of the online meeting to the terminal device 12.

In step S111, the control unit 112 acquires a signal from the sensor 13 and determines whether an impact of a predetermined threshold or more is detected. The control unit 112 proceeds with the process to step S112 when the impact of the predetermined threshold or more is detected and proceeds with the process to step S113 when the impact of the predetermined threshold or more is not detected.

In step S112, the control unit 112 interrupts the online meeting of the target person and notifies the server 20 that the vehicle 10 has received the strong impact. The server 20 causes each of the terminals of the meeting attendees to display the fact that the vehicle 10 has received the strong impact. That is, when the impact of the predetermined threshold or more is detected using the sensor 13 after the control unit 112 determines to permit participation in the online meeting, the control unit 112 interrupts the online meeting and notifies, through the server 20, the participants in the online meeting that the vehicle 10 has received the strong impact because there is a risk of a collision.

In step S113, the control unit 112 determines whether the online meeting is finished. When the online meeting is not finished, the process is returned to step S109.

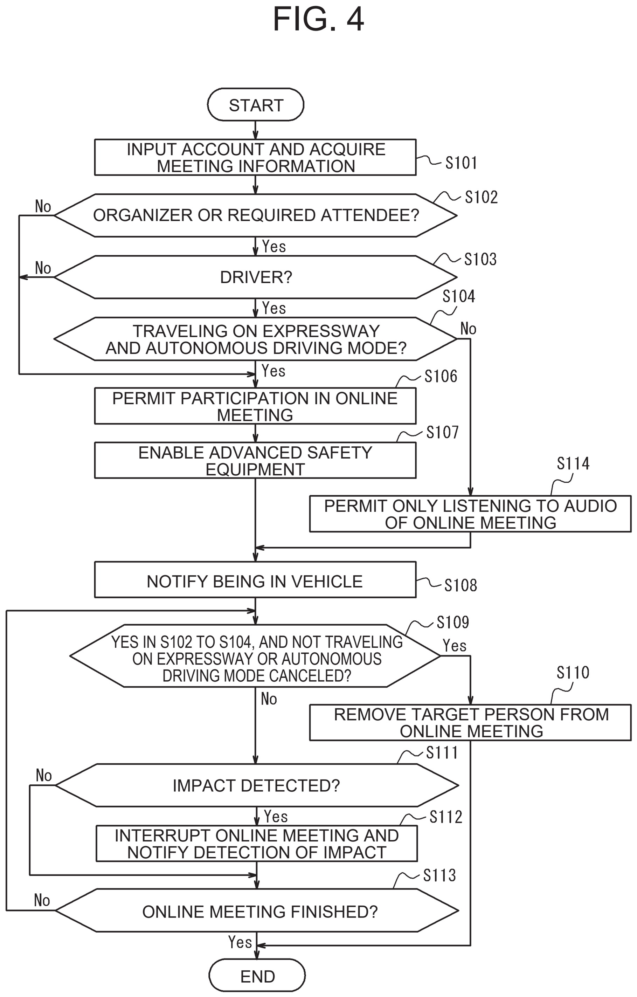

Next, second operation of the information processing device 11 according to the embodiment will be described with reference to FIG. 4. The second operation example differs from the first operation example described above in that step S114 is included instead of step S105. Since the other steps are the same as those of the first operation example, description thereof will be omitted.

In step S114, the control unit 112 determines to permit only listening to audio of the online meeting. The control unit 112 may cause the terminal device 12 to display a message indicating that only listening to the audio of the online meeting is permitted. The control unit 112 may cause the terminal device 12 to display the reason for the determination, the conditions for being able to participate in the online meeting, or the like. When the control unit 112 determines to permit only listening to the audio of the online meeting, the control unit 112 proceeds with the process to step S108.

As described above, the information processing device 11 according to the present embodiment determines the role of the target person in the online meeting based on information about the online meeting, and determines whether to permit the target person to participate in the online meeting in the vehicle based on the role. Thus, the present disclosure makes it possible to further improve the safety of the online meeting in the vehicle.

Specifically, when the role is the organizer or the required attendee of the online meeting, the information processing device 11 determines not to permit participation in the online meeting or determines to permit only listening to audio of the online meeting. This makes it possible to restrict the organizer or the required attendee of the meeting from participating in the online meeting from inside the vehicle.

In addition, when the target person is not the driver, or when the target person is the driver, but the vehicle 10 is traveling on an expressway and is in the autonomous driving mode, the information processing device 11 determines to permit participation in the online meeting. This enables the target person to participate in the online meeting when the risk of the online meeting is low.

In addition, when the information processing device 11 determines to permit participation in the online meeting, the information processing device 11 enables the advanced safety equipment of the vehicle 10. This makes it possible to support the driver's safe driving and further improve safety.

In addition, after the information processing device 11 determines to permit participation in the online meeting when the vehicle 10 is traveling on an expressway and is in the autonomous driving mode, when the vehicle 10 is not traveling on the expressway or the autonomous driving mode is canceled, the information processing device 11 performs control to remove the target person from the online meeting. This makes it possible to restrict participation in the online meeting from inside the vehicle when the risk of the online meeting arises due to changes in the situation.

In addition, an impact of the predetermined threshold or more is detected using the sensor 13 after the information processing device 11 determines to permit participation in the online meeting, the information processing device 11 interrupts the online meeting and notifies the participants of the online meeting that the vehicle 10 has received the strong impact. This makes it possible to automatically interrupt the online meeting when there is a risk of a collision.

### Program

A computer that can execute program instructions may be used to cause the computer to function as the information processing device 11. A program can cause the computer to function as the information processing device 11 by causing the computer to execute the above-mentioned operation.

The program may be stored on a non-transitory computer readable medium. The non-transitory computer readable medium is, for example, a flash memory, a magnetic recording device, an optical disk, a magneto-optical recording medium, or a ROM. The program is distributed by, for example, selling, transferring, or lending a portable medium such as a Secure Digital (SD) card, a digital versatile disc (DVD), or a compact disc read only memory (CD-ROM) on which the program is stored. The program may be distributed by storing the program in a storage of a server and transferring the program from the server to another computer. The program may be provided as a program product.

For example, the computer temporarily stores the program stored on the portable medium or the program transferred from the server in the main storage device. Then, the computer causes the processor to read the program stored in the main storage device, and causes the processor to execute a process corresponding to the read program. The computer may read the program directly from the portable medium and execute a process corresponding to the program. The computer may execute a process corresponding to the received program each time the program is transferred from the server to the computer. The process may be executed by a so-called application service provider (ASP) service that implements the function only by providing execution instructions and acquiring results without transferring the program from the server to the computer. The program includes information that is used for processing by electronic computers and equivalent to a program. For example, data that is not a direct command to a computer but has the property of defining the processing of the computer corresponds to the "data equivalent to a program".

Although the embodiment has been described as a representative example, various modifications and changes can be made without departing from the gist of the present disclosure. For example, multiple configuration blocks or processing steps described in the embodiment can be combined into one configuration block or processing step, or one configuration block or processing step can be divided into multiple configuration blocks or processing steps.

## Claims

1. An information processing device (11) comprising a control unit (112), wherein:
the control unit (112) is configured to determine a role of a person to be a target in an online meeting based on information about the online meeting; and
the control unit (112) is configured to determine whether to permit the person to participate in the online meeting in a vehicle based on the role.

2. The information processing device (11) according to claim 1, wherein when the role is an organizer of the online meeting or a required attendee of the online meeting, the control unit (112) is configured to determine not to permit the person to participate in the online meeting or configured to determine to permit the person only to listen to audio of the online meeting.

3. The information processing device (11) according to claim 1, wherein:
the control unit (112) is configured to determine whether the person is a driver of the vehicle based on a position of each person in the vehicle; and
the control unit (112) is configured to determine to permit the person to participate in the online meeting when the person is not the driver.

4. The information processing device (11) according to claim 3, wherein:
the control unit (112) is configured to determine whether the vehicle is traveling on an expressway and is in an autonomous driving mode based on map information and state information of the vehicle, when the person is the driver; and
the control unit (112) is configured to determine to permit the person to participate in the online meeting when the vehicle is traveling on the expressway and is in the autonomous driving mode.

5. The information processing device (11) according to claim 1, wherein when the control unit (112) determines to permit the person to participate in the online meeting, the control unit (112) is configured to permit the person to participate in the online meeting and perform control to enable advanced safety equipment of the vehicle.

6. The information processing device (11) according to claim 4, wherein after the control unit (112) determines to permit the person to participate in the online meeting when the vehicle is traveling on the expressway and is in the autonomous driving mode, when the vehicle is not traveling on the expressway or the autonomous driving mode is canceled, the control unit (112) is configured to perform control to remove the person from the online meeting.

7. The information processing device (11) according to claim 1, wherein when the control unit (112) detects an impact of a predetermined threshold or more by using a sensor included in the vehicle after the control unit (112) determines to permit the person to participate in the online meeting, the control unit (112) is configured to interrupt the online meeting and configured to notify participants of the online meeting that the vehicle has received a strong impact.

8. The information processing device (11) according to claim 1, further comprising a communication unit (114) that communicates with a server, wherein when the information about the online meeting is received from the server, and the control unit (112) permits the person to participate in the online meeting in the vehicle, the communication unit (114) receives video and audio of the online meeting from the server.

9. The information processing device (11) according to claim 1, further comprising an input unit (111) configured to receive an operation of the person inputting an account, wherein:
the account includes personal identification information that identifies an individual; and
the control unit (112) is configured to determine the role of the person in the online meeting from the personal identification information and the information about the online meeting.

10. The information processing device (11) according to claim 3, further comprising an input unit (111) configured to receive an operation of the person inputting an account, wherein:
the account includes seat identification information that identifies a seat in the vehicle; and
the control unit (112) is configured to determine whether the person is the driver of the vehicle from the seat identification information.

11. An information processing system comprising:
an information processing device (11) mounted on a vehicle; and
a terminal device (12) mounted on the vehicle, wherein:
the information processing device (11) is configured to determine a role of a person to be a target in an online meeting based on information about the online meeting;
the information processing device (11) is configured to determine whether to permit the person to participate in the online meeting in the vehicle based on the role;
the terminal device (12) is configured to receive video and audio of the online meeting when the information processing device (11) permits the person to participate in the online meeting in the vehicle; and
the terminal device (12) is configured to output the video and the audio of the online meeting received by the information processing device (11).

12. The information processing system according to claim 11, wherein when the role is an organizer of the online meeting or a required attendee of the online meeting, the information processing device (11) is configured to determine not to permit the person to participate in the online meeting or configured to determine to permit the person only to listen to audio of the online meeting.

13. The information processing system according to claim 11, wherein:
the information processing device (11) is configured to determine whether the person is a driver of the vehicle based on a position of each person in the vehicle; and
the information processing device (11) is configured to determine to permit the person to participate in the online meeting when the person is not the driver.

14. The information processing system according to claim 13, wherein:
the information processing device (11) is contigured to determine whether the vehicle is traveling on an expressway and is in an autonomous driving mode based on map information and state information of the vehicle, when the person is the driver; and
the information processing device (11) is configured to determine to permit the person to participate in the online meeting when the vehicle is traveling on the expressway and is in the autonomous driving mode.

15. An information processing method executed by an information processing device (11) mounted on a vehicle, the information processing method comprising:
determining a role of a person to be a target in an online meeting based on information about the online meeting; and
determining whether to permit the person to participate in the online meeting in the vehicle based on the role.
